# EUROPEAN PATENT APPLICATION

(11) **EP 4 074 176 A1**
(43) Date of publication of application: **19.10.2022**
(21) Application number: 20899534.0
(22) Date of filing: 25.11.2020
(51) Int. Cl.: A01N 25/12, A01N 25/08, A01N 43/56, A01N 51/00, A01P 7/04

(54) **IMPREGNATED PESTICIDE GRANULAR COMPOSITION FOR SOIL TREATMENT**

(30) Priority: 09.12.2019 JP 2019221900; 31.08.2020 JP 2020145244
(71) Applicant: SUMITOMO CHEMICAL COMPANY, LIMITED, Tokyo 103-6020 (JP)
(72) Inventor: TAKEMOTO, Yukie, Takarazuka-shi, Hyogo 665-8555 (JP); KISHI, Nobuhiro, Takarazuka-shi, Hyogo 665-8555 (JP)
(74) Representative: Winter, Brandl - Partnerschaft mbB
(86) International application number: PCT/JP2020/043791
(87) International publication number: WO 2021/117484

(57) **Abstract**

Provided is an impregnated pesticide granular composition for soil application comprising: a) a nicotinic acetylcholine receptor competitive modulator or a ryanodine receptor modulator; b) a polar organic solvent having, among Hansen solubility parameters, a dP of 4.5 or larger and 11.0 or smaller, and a dH of 4.5 or larger and 11.0 or smaller; and c) a water-insoluble, oil-absorbing granular carrier having an oil absorption capacity of 1 to 70%, and a particle diameter of 0.2 to 2.0 mm, wherein the composition having a hardness of 0.2 kg or larger. According to the present invention, an impregnated pesticide granular composition for soil application that is capable of demonstrating a stable biological effect can be provided.

## Description

### TECHNICAL FIELD

This patent application claims the priority and the benefit from the Paris Convention based on Japanese Patent Application No. 2019-221900 (filed on December 9, 2019) and Japanese Patent Application No. 2020-145244 (filed on August 31, 2020), and the entire contents described in the application are incorporated in this description herein by reference.

The present invention relates to an impregnated pesticide granular composition for soil application.

### BACKGROUND ART

Conventionally, various forms of composition have been known as a pesticide granular composition for soil application.

Among them, "impregnated granular composition" in which a pesticide active ingredient dissolved or dispersed in an organic solvent or a surfactant is retained in a solid carrier has been widely used for the convenience of production. (See Patent Documents 1 and 2.)

### CITATION LIST

### PATENT DOCUMENTS

Patent Document 1: JPH05-902A
Patent Document 2: JP2005-15351A

### SUMMARY OF THE INVENTION

### PROBLEMS TO BE SOLVED BY THE INVENTION

The impregnated pesticide granular composition, prepared with use of some sort of insecticidal compound as an active ingredient, has however been concerned about instability of the biological effect.

### MEANS FOR SOLVING THE PROBLEMS

The present inventors have found that, in an impregnated pesticide granular composition with use of a) a nicotinic acetylcholine receptor competitive modulator or a ryanodine receptor modulator as an active ingredient, the granular composition that contains an active ingredient, a polar organic solvent having a specific property, and a water-insoluble, oil-absorbing granular carrier having a specific oil absorption capacity and a particle diameter, and has a specific range of hardness (hereinafter, referred to as a composition of the present invention) is the composition that can demonstrate a more stable biological effect, and thus have completed the present invention.

That is, the present invention is as follows.
[1] An impregnated pesticide granular composition for soil application comprising:
   a) a nicotinic acetylcholine receptor competitive modulator or a ryanodine receptor modulator;
   b) a polar organic solvent having, among Hansen solubility parameters, a dP of 4.5 or more and 11.0 or less, and a dH of 4.5 or more and 11.0 or less; and
   c) a water-insoluble, oil-absorbing granular carrier having an oil absorption capacity of 1 to 70%, and a particle diameter of 0.2 to 2.0 mm, wherein
      the composition having a hardness of 0.2 kg or more.
[2] The pesticide granular composition according to [1], wherein the oil absorption capacity of the oil-absorbing granular carrier is 1 to 40%.
[3] The pesticide granular composition according to [1] or [2], further comprising d) a pesticide active ingredient having a melting point of 100°C or lower.
[4] The pesticide granular composition according to any one of [1] to [3], wherein the nicotinic acetylcholine receptor competitive modulator is imidacloprid, thiamethoxam or clothianidin.
[5] The pesticide granular composition according to any one of [1] to [4], wherein the ryanodine receptor modulator is chlorantraniliprole or cyantraniliprole.
[6] The pesticide granular composition according to any one of [3] to [5], wherein the pesticide active ingredient having a melting point of 100°C or lower is a pyrethroid compound.
[7] The pesticide granular composition according to [6], wherein the pyrethroid compound is permethrin, cyfluthrin, beta-cyfluthrin, gamma-cyhalothrin, lambda-cyhalothrin, bifenthrin, deltamethrin, cypermethrin, alpha-cypermethrin, beta-cypermethrin, zeta-cypermethrin, fenpropathrin, tefluthrin, fenvalerate, esfenvalerate, ethofenprox or tau-fluvalinate.
[8] The pesticide granular composition according to any one of [1] to [7], wherein the oil-absorbing granular carrier is a natural mineral or a crushed thereof.
[9] A pest control method characterized by applying the composition described in any one of [1] to [8] to a soil.

### EFFECT OF THE INVENTION

According to the present invention, an impregnated pesticide granular composition for soil application that is capable of demonstrating a stable biological effect can be provided.

### MODE FOR CARRYING OUT THE INVENTION

In the present invention, the nicotinic acetylcholine receptor competitive modulator is exemplified by neonicotinoid insecticidal compounds such as acetamiprid, clothianidin, dinotefuran, imidacloprid, nitenpyram, thiacloprid and thiamethoxam; and sulfoximine insecticidal compounds such as flupyradifuron, sulfoxaflor and triflumezopyrim, as described in IRAC Classification ver. 9.1, among them the neonicotinoid insecticidal compounds are preferable, and imidacloprid, thiamethoxam and clothianidin are more preferable.

In the present invention, the ryanodine receptor modulator is exemplified by diamide insecticidal compounds such as flubendiamide, chlorantraniliprole, cyantraniliprole, cyhalodiamide, cyclaniliprole, and tetraniliprole, among them chlorantraniliprole and cyantraniliprole are preferable.

The composition of the present invention can further contain a pesticide active ingredient having a melting point of 100°C or lower. The pesticide active ingredient having a melting point of 100°C or lower is exemplified as below.

### Insecticide

- Organophosphorus insecticide
   Acephate, phenitrothion, isoxathion, diazinone, disulfoton, prothiophos, pyridafenthion, etc.
- Carbamate insecticide
   Ethiofencarb, fenobucarb, etc.
- Pyrethroid insecticide
   Allethrin, flucythrinate, permethrin, cyfluthrin, beta-cyfluthrin, gamma-cyhalothrin, lambda-cyhalothrin, bifenthrin, deltamethrin, cypermethrin, alpha-cypermethrin, beta-cypermethrin, zeta-cypermethrin, fenpropathrin, tefluthrin, fenvalerate, esfenvalerate, ethofenprox, tau-fluvalinate, etc.
- Others
   Pyridalyl, etc.
   Insect growth regulator
   Pyriproxyfen, etc.
   Nematicide
   Imicyafos, fosthiazate, etc.
   Fungicide
- Triazole fungicide
   Propiconazole, etc.
- Azole fungicide
   Prochloraz, etc.
- Acylalanine fungicide
   Metalaxyl M, metalaxyl, etc.
   Herbicide
- Carbamate herbicide
   Chlorpropham, benthiocarb, esprocarb, molinate, etc.
- Acid amide herbicide
   Pretilachlor, metolachlor, etc.
- Dinitroaniline herbicide
   Trifluralin, etc.

As the pesticide active ingredient having a melting point of 100°C or lower, particularly, insecticide, nematicide, insect growth regulator, and fungicide are preferable.

The Hansen solubility parameter is a kind of solubility parameter, and is given by a three-component coordinate involving dD (dispersion term), dP (polarity term), and dH (hydrogen bond term). Definition and method of estimation is described in a literature by Charles M. Hansen "The three dimensionnal solubility parameters", J. Paint Technol., Vol. 39, p.105 (1967). For example, the three-component coordinates (dD, dP, dH) is obtainable by using HSPiP software, delivered on-line by Prof. Steven Abbott.

The polar organic solvent having a Hansen solubility parameter dP of 4.5 or more and 11.0 or less, and a dH of 4.5 or more and 11.0 or larger (hereinafter, referred to as the present polar organic solvent) is exemplified by N-butyl-2 pyrrolidone, N-octyl-2-pyrrolidone, ethyl acetate, phenyl acetate, ethyl benzoate, butyl benzoate, benzyl benzoate, diethyl adipate, cyclohexanone, dibutyl maleate, N,N-dimethyloctanamide, N,N-dimethyldecanamide, N,N-dimethyl-9-decenamide, and methyl 5-(dimethylamino)-2-methyl-5-oxopentanoate. As the present polar organic solvent, a commercially available product can be used, and such a commercially available product is exemplified by Agnique (registered trademark) AMD810 (mixture of N,N-dimethyloctanamide and N,N-dimethyldecanamide, from BASF SE), Hallcomid M8-10 (mixture of N,N-dimethyloctanamide and N,N-dimethyldecanamide, from Stepan), Hallcomid M10 (mixture mainly composed of N,N-dimethyldecanamide, from Stepan), Hallcomid 1025 (mixture mainly composed of N,N-dimethyl-9-decenamide, from Stepan), and Rhodiasolv (registered trademark) Polarclean (methyl 5-(dimethylamino)-2-methyl -5-oxopentanoate, from Solvay).

The present polar organic solvent used in the present invention is more preferably a solvent having a flash point of 80°C or higher, from the viewpoint of safety. For example, by N-butyl-2-pyrrolidone, N-octyl-2-pyrrolidone, butyl benzoate, benzyl benzoate, diethyl adipate, N,N-dimethyloctanamide, N,N-dimethyldecanamide, N,N-dimethyl-9-decenamide, methyl 5-(dimethylamino)-2-methyl-5-oxopentanoate, Agnique (registered trademark) AMD810, Hallcomid M8-10, Hallcomid M10, Hallcomid 1025, and Rhodiasolv (registered trademark) Polarclean are preferable.

The composition of the present invention can contain an organic solvent other than the present polar organic solvent, to an extent that the effect of the present invention will not be ruined.

The water-insoluble, oil-absorbing granular carrier used in the present invention (hereinafter, referred to as the present carrier) has an oil absorption capacity of 1 to 70%, and a particle diameter of 0.2 to 2.0 mm. Among the present carrier, the one having an oil absorption capacity of 1 to 40% is preferable, and the one having an oil absorption capacity of 1 to 20% is more preferable.

The particle having a particle diameter of 0.2 to 2.0 mm means a particle, when screened with use of sieves having openings of 180 µm and 2000 µm (mesh sieves of 200 mm in inner diameter and 45 mm in depth, specified by JIS Z8801), whose weight fraction falling in the aforementioned range (that is, passing through the 2000 µm sieve and remaining on the 180 µm sieve) is 95% or more.

As the carrier, preferably used is a natural mineral or a crushed thereof. As the natural mineral or the crushed thereof, natural pumice such as silica sand, natural hard zeolite, granular attapulgite, granular sepiolite, calcined diatomaceous earth, and calcined gypsum are used. In particular, natural pumice and natural hard zeolite are preferable.

The natural pumice is exemplified by Ishikawalite (registered trademark) (from Ishikawalite Industry Co., Ltd.), Kagalite (registered trademark) (from Neolite Kosan Co., Ltd.), and purified shirasu (from Seishin Sangyo Co., Ltd.); the natural hard zeolite is exemplified by Izukalite (from Maruyama Seifunsho, Gs.); and the calcined diatomaceous earth is exemplified by Isolite (registered trademark) CG (from Isolite Insulating Products Co., Ltd.).

The oil absorption capacity (%) of the present carrier means an oil absorption capacity weight (g) per 100 g of a test material, measured in an oil absorption capacity test according to JIS K5101-13-1, with use of N-octyl-2-pyrrolidone (Agsolex 8, from Akzo novel N.V.) in place of linseed oil.

The present carrier is specifically exemplified by Kagalite (registered trademark) No. 2 (oil absorption capacity = 10 to 16%), Kagalite (registered trademark) No. 3 (oil absorption capacity = 4 to 8%), Kagalite (registered trademark) No. 23 (oil absorption capacity = 6 to 10%), Ishikawalite (registered trademark) Noyaku No. 3 (oil absorption capacity = 4 to 8%), Ishikawalite (registered trademark) Noyaku No. 4 (oil absorption capacity = 3 to 5%), refined shirasu 1.2 m/m to 0.6 m/m (oil absorption capacity = 9 to 11%), and Izukalite (oil absorption capacity = 10 to 16%).

The content of the nicotinic acetylcholine receptor competitive modulator or the ryanodine receptor modulator used in the present invention is 0.001 to 10 parts by weight, preferably 0.01 to 5 parts by weight, and more preferably 0.03 to 2 parts by weight, per 100 parts by weight of the composition of the present invention.

The content of the pesticide active ingredient having a melting point of 100°C or lower, when contained in the composition of the present invention, is 0.001 parts by weight to 36 parts by weight, preferably 0.001 to 18 parts by weight, and more preferably 0.001 to 5 parts by weight, per 100 parts by weight of the present pesticide composition.

The content of the present polar organic solvent in the composition of the present invention is 1 to 40 parts by weight, preferably 1 to 20 parts by weight, and more preferably 1.5 to 15 parts by weight, per 100 parts by weight of the composition of the present invention.

The content of the present carrier in the composition of the present invention is 50.0 to 98.8 parts by weight, preferably 75.0 to 98.5 parts by weight, and more preferably 84.0 to 98.0 parts by weight, per 100 parts by weight of the composition of the present invention.

In the composition of the present invention, the ratio of a value obtained by dividing the product of the content (parts by weight) of the present carrier per 100 parts by weight of the composition of the present invention and the oil absorption capacity (%) by 100, and the content (parts by weight) of a mixed liquid of the active ingredient (the nicotinic acetylcholine receptor competitive modulator or the ryanodine receptor modulator; in a case where the composition of the present invention contains the pesticide active ingredient having a melting point of 100°C or lower, the nicotinic acetylcholine receptor competitive modulator or the ryanodine receptor modulator, and the pesticide active ingredient having a melting point of 100°C or lower) and the present polar organic solvent, per 100 parts by weight of the composition of the present invention, is preferably in the range from 1:0.2 to 1:2, and more preferably in the range from 1:0.5 to 1:1.5.

In the composition of the present invention, a hardness of 0.2 kg or more means that the composition of the present invention, when the particle thereof is gradually pressurized by a simple particle hardness tester from Tsutsui Scientific Instruments Co., Ltd., collapses at a load amount of 0.2 kg or more. The hardness of the composition of the present invention is usually 0.2 kg or more, preferably in the range from 0.2 to 6.0 kg, and more preferably in the range of from 0.4 to 4.0 kg.

The composition of the present invention is produced by mixing a solution in which the active ingredient (the nicotinic acetylcholine receptor competitive modulator or the ryanodine receptor modulator; in a case where the composition of the present invention contains the pesticide active ingredient having a melting point of 100°C or lower, the nicotinic acetylcholine receptor competitive modulator or the ryanodine receptor modulator, and the pesticide active ingredient having a melting point of 100°C or lower) is dissolved into the present organic solvent, with the oil-absorbing granular carrier. Various mixers are applicable for the production. The mixers are preferably, but not limited to, those less likely to fragmentate the granular carrier, such as horizontal cylindrical mixer, V-type mixer, double conical mixer, and inverted conical mixer.

The composition of the present invention is directly applied to a soil of an agricultural land such as a field and an orchard, or a non-agricultural land such as a lawn, golf course, and roadside trees. The application rate is usually 0.01 to 50 kg per 10 ares.

Hereinafter, the present invention will be detailed with reference to Examples.

### EXAMPLES

The Hansen solubility parameters of the polar organic solvents used here are shown in Table 1. The values were obtained with use of HSPiP.

**[Table 1]**

| | dD | dP | dH |
|---|---|---|---|
| Rhodiasolv (registered trademark) Polarclean | 17.2 | 9.5 | 10.6 |
| Agnique (registered trademark) AMD810 | 16.8 | 7.3 to 7.5 | 5.5 to 5.6 |
| N-octyl-2-pyrrolidone | 16.9 | 6.2 | 5.8 |
| Solvesso (registered trademark) 150 | 18.0 | 1.0 | 3.0 |
| Propylene glycol monomethyl ether | 15.6 | 6.3 | 11.6 |
| VINYCIZER (registered trademark) 40 | 16.7 | 2.5 | 6.2 |
| VINYCIZER (registered trademark) 20 | 16.6 | 5.4 | 1.9 |
| Acetophenone | 18.8 | 9.0 | 4.0 |

Rhodiasolv (registered trademark) Polarclean: methyl 5-(dimethylamino)-2-methyl-5- oxopentanoate, from Solvay Agnique (registered trademark) AMD810: mixture of N,N-dimethyloctanamide (50 to 75%) and N,N-dimethyldecanamide (50 to 25%), from BASF SE
Solvesso (registered trademark) 150: aromatic hydrocarbon, from ExxonMobil Corporation
VINYCIZER (registered trademark) 40: diisobutyl adipate, from Kao Corporation
VINYCIZER (registered trademark) 20: ditridecyl phthalate, from Kao Corporation

Pesticide active ingredients having a melting point of 100°C or lower used in Examples are listed below.
Pyriproxyfen: m.p. 48 to 50°C
Pretilachlor: liquid at normal temperature
Esfenvalerate: m.p. 59 to 61°C
Lambda-cyhalothrin: liquid at normal temperature
Cypermethrin: m.p. 61 to 83°C

### Production Example 1

0.20 parts by weight of clothianidin and 9.80 parts by weight of Rhodiasolv (registered trademark) Polarclean were mixed to obtain a chemical liquid containing the pesticide active ingredient. The chemical liquid was mixed with 90 parts by weight of the natural pumice (Kagalite (registered trademark) No. 2, sieved to 500 to 1000 µm, oil absorption capacity = 8 to 9%), to obtain a pesticide granular composition.

### Productions Examples 2 and 3, and Comparative Examples 1 to 4

Pesticide Granular compositions were obtained in the same procedure as in Production Example 1, individually by using the compounds and the usage specified in Table 2. The natural pumice shown in Table 2 is a preparation of Kagalite (registered trademark) No. 2 sieved to a particle size of 500 to 1000 µm, with an oil absorption capacity of 8 to 9%.

### Production Example 4

0.20 parts by weight of clothianidin, 1.0 part by weight of pyriproxyfen, and 8.80 parts by weight of Rhodiasolv (registered trademark) Polarcleanwere mixed to obtain a chemical liquid containing pesticide active ingredients. The chemical liquid was mixed with 90 parts by weight of the natural pumice (Kagalite (registered trademark) No. 2, sieved to a particle size of 500 to 1000 µm, oil absorption capacity = 8 to 9%), to obtain a pesticide granular composition.

### Productions Examples 5 to 9, and Comparative Examples 5 to 9

Pesticide granular compositions were obtained in the same procedure as in Production Example 4, individually by using the compounds and the usage specified in Tables 3 to 5. The natural pumice shown in Tables 3 to 5 is a preparation of Kagalite (registered trademark) No. 2 sieved to a particle size of 500 to 1000 µm, with an oil absorption capacity of 8 to 9%.

**[Table 2]**

| | Production Example 1 | Production Example 2 | Production Example 3 | Comparative Example 1 | Comparative Example 2 | Comparative Example 3 | Comparative Example 4 |
|---|---|---|---|---|---|---|---|
| Clothianidin | 0.20 | 0.20 | 0.20 | 0.20 | 0.20 | 0.20 | 0.20 |
| Rhodiasolv (registered trademark) Polarclean | 9.80 | - | - | - | - | - | - |
| Agnique (registered trademark) AMD810 | - | 9.80 | - | - | - | - | - |
| N-octyl-2-pyrrolidone | - | - | 9.80 | - | - | - | - |
| Solvesso (registered trademark) 150 | - | - | - | 9.80 | - | - | - |
| Propylene glycol monomethyl ether | - | - | - | - | 9.80 | - | - |
| VINYCIZER (registered trademark) 40 | - | - | - | - | - | 9.80 | - |
| VINYCIZER (registered trademark) 20 | - | - | - | - | - | - | 9.80 |
| Natural pumice | 90.00 | 90.00 | 90.00 | 90.00 | 90.00 | 90.00 | 90.00 |
| Total | 100.00 | 100.00 | 100.00 | 100.00 | 100.00 | 100.00 | 100.00 |

**[Table 3]**

| | Production Example 4 | Production Example 5 | Production Example 6 | Comparative Example 5 | Comparative Example 6 |
|---|---|---|---|---|---|
| Clothianidin | 0.20 | 0.20 | 0.20 | 0.20 | 0.20 |
| Pyriproxyfen | 1.00 | 1.00 | 1.00 | 1.00 | 1.00 |
| Rhodiasolv (registered trademark) Polarclean | 8.80 | - | - | - | - |
| Agnique (registered trademark) AMD810 | - | 8.80 | - | - | - |
| N-octyl-2-pyrrolidone | - | - | 8.80 | - | - |
| Solvesso (registered trademark) 150 | - | - | - | 8.80 | - |
| Propylene glycol monomethyl ether | - | - | - | - | 8.80 |
| Natural pumice | 90.00 | 90.00 | 90.00 | 90.00 | 90.00 |
| Total | 100.00 | 100.00 | 100.00 | 100.00 | 100.00 |

**[Table 4]**

| | Production Example 7 | Comparative Example 7 |
|---|---|---|
| Clothianidin | 0.20 | 0.20 |
| Pretilachlor | 1.00 | 1.00 |
| Rhodiasolv (registered trademark) Polarclean | 8.80 | - |
| Acetophenone | - | 8.80 |
| Natural pumice | 90.00 | 90.00 |
| Total | 100.00 | 100.00 |

**[Table 5]**

| | Production Example 8 | Production Example 9 | Comparative Example 8 | Comparative Example 9 |
|---|---|---|---|---|
| Chlorantraniliprole | 0.20 | - | 0.20 | - |
| Cyantraniliprole | - | 0.20 | - | 0.20 |
| Pyriproxyfen | 1.00 | 1.00 | 1.00 | 1.00 |
| Agnique (registered trademark) AMD810 | 8.80 | 8.80 | - | - |
| Solvesso (registered trademark) 150 | - | - | 8.80 | 8.80 |
| Natural pumice | 90.00 | 90.00 | 90.00 | 90.00 |
| Total | 100.00 | 100.00 | 100.00 | 100.00 |

### Test Example 1

1 g of the pesticide granular composition obtained in each of Production Examples 1 to 9 and Comparative Examples 1 to 9 was sampled five times, and analyzed contents of active ingredients by high performance liquid chromatography (HPLC), from which an average value and a coefficient of variation were determined.

Also the hardness of each obtained particle was measured with a simple particle hardness tester from Tsutsui Scientific Instruments Co., Ltd., according to the following procedure. The test used a small pan spring scale type-3, and a conical pressurizing rod.
(i) Place the sample particle on a sample stage, and rotate the pressurizing handle to lower the pressurizing rod.
(ii) Rotate the handle slowly, and record the hardness (kg) indicated by an indwelling needle, after the sample particle collapsed and an indicator needle returned back. Repeat the operation three times, and find an average value to determine the hardness.

The results are shown in Tables 6 to 9.

As is clear from the results, the pesticide granular compositions of the present invention obtained in Production Examples 1 to 9 demonstrated smaller coefficients of variation in the analytical value of the nicotinic acetylcholine receptor competitive modulator or the ryanodine receptor modulator, as compared with the pesticide granular compositions obtained in Comparative Examples 1 to 9, proving that the content of the active ingredient in the composition is uniform, and that a stable biological effect is expectable. Also the active ingredient having a melting point of 100°C or lower demonstrated smaller coefficients of variation in the analytical value, proving that a stable biological effect is expectable.

**[Table 6]**

| | Production Example 1 | Production Example 2 | Production Example 3 | Comparative Example 1 | Comparative Example 2 | Comparative Example 3 | Comparative Example 4 |
|---|---|---|---|---|---|---|---|
| Clothianidin content (%) | 0.204 | 0.211 | 0.198 | 0.202 | 0.204 | 0.401 | 0.241 |
| Coefficient of variation (%) | 0.7 | 4.0 | 1.2 | 56.2 | 20.1 | 59.8 | 23.6 |
| Hardness (kg) | 0.57 | 0.48 | 0.82 | 0.80 | 0.61 | 0.72 | 0.61 |

**[Table 7]**

| | Production Example 4 | Production Example 5 | Production Example 6 | Comparative Example 5 | Comparative Example 6 |
|---|---|---|---|---|---|
| Clothianidin content (%) | 0.204 | 0.201 | 0.198 | 0.215 | 0.133 |
| Coefficient of variation (%) | 2.2 | 2.5 | 2.0 | 21.7 | 15.3 |
| Pyriproxyfen content (%) | 0.974 | 0.974 | 0.960 | 0.988 | 0.996 |
| Coefficient of variation (%) | 2.2 | 3.6 | 2.6 | 1.5 | 2.4 |
| Hardness (kg) | 0.69 | 0.88 | 0.49 | 0.55 | 0.71 |

**[Table 8]**

| | Production Example 7 | Comparative Example 7 |
|---|---|---|
| Clothianidin content (%) | 0.212 | 0.209 |
| Coefficient of variation (%) | 2.0 | 10.7 |
| Pretilachlor content (%) | 0.999 | 1.030 |
| Coefficient of variation (%) | 2.4 | 1.5 |
| Hardness (kg) | 0.71 | 0.64 |

**[Table 9]**

| | Production Example 8 | Production Example 9 | Comparative Example 8 | Comparative Example 9 |
|---|---|---|---|---|
| Chlorantraniliprole content (%) | 0.200 | - | 0.135 | - |
| Coefficient of variation (%) | 1.5 | - | 46.1 | - |
| Cyantraniliprole content (%) | - | 0.204 | - | 0.202 |
| Coefficient of variation (%) | - | 4.8 | - | 25.4 |
| Pyriproxyfen content (%) | 0.988 | 0.945 | 0.965 | 0.95 |
| Coefficient of variation (%) | 1.3 | 4.9 | 2.6 | 5.9 |
| Hardness (kg) | 0.55 | 0.80 | 0.72 | 0.82 |

### Productions Examples 10 and 11, and Comparative Examples 10 and 11

0.20 parts by weight of clothianidin and 9.80 parts by weight of N-octyl-2-pyrrolidone were mixed to obtain a chemical liquid containing the pesticide active ingredient. The chemical liquid was mixed with the oil-absorbing granular carrier to have compositions shown in Table 10, and obtained the individual pesticide granular compositions. In Table 10, Kagalite (registered trademark) No. 2 is a natural pumice from Neolite Kosan Co., Ltd. (oil absorption capacity = 10 to 16%), zeolite 1.5 to 0.5 mm is a natural hard zeolite sieved to 1.5 to 0.5 mm from Neolite Kosan Co., Ltd. (oil absorption capacity = 10 to 16%), Kanto bentonite, granulated, is a fine particle of sodium bentonite from Neolite Kosan Co., Ltd. (oil absorption capacity = 14 to 20%), and Kasaoka clay, granulated, is a fine particle of calcium bentonite from Neolite Kosan Co., Ltd. (measurement of oil absorption capacity not possible).

### Test Example 2

The hardness of each obtained particle was measured with a simple particle hardness tester from Tsutsui Scientific Instruments Co., Ltd., according to the following procedure. The test used a small pan spring scale type-3, and a conical pressurizing rod.
(i) Place the sample particle on a sample stage, and rotate the pressurizing handle to lower the pressurizing rod.
(ii) Rotate the handle slowly, and record the hardness (kg) indicated by an indwelling needle, after the sample particle collapsed and an indicator needle returned back. Repeat the operation three times, and find an average value to determine the hardness.

**[Table 10]**

| | Production Example 10 | Production Example 11 | Comparative Example 10 | Comparative Example 11 |
|---|---|---|---|---|
| Clothianidin | 0.20 | 0.20 | 0.20 | 0.20 |
| N-octyl-2-pyrrolidone | 9.80 | 9.80 | 9.80 | 9.80 |
| Kagalite (registered trademark) No. 2 | 90.00 | - | - | - |
| Zeolite 1.5-0.5 mm | - | 90.00 | - | - |
| Kanto bentonite, granulated | - | - | 90.00 | - |
| Kasaoka clay, granulated | - | - | - | 90.00 |
| Total | 100.00 | 100.00 | 100.00 | 100.00 |
| Hardness (kg) | 0.72 | 2.46 | 0.03 | 0.01 |

### Production Examples 12 to 16

Pesticide granular compositions were obtained in the same procedure as in Production Example 4, individually by using the compounds and the usage specified in Table 11. The natural pumice shown in Table 11 is a preparation of Kagalite (registered trademark) No. 2 sieved to a particle size of 500 to 1000 µm, with an oil absorption capacity of 8 to 9%.

**[Table 11]**

| | Production Example 12 | Production Example 13 | Production Example 14 | Production Example 15 | Production Example 16 |
|---|---|---|---|---|---|
| Clothianidin | 0.20 | 0.20 | 0.20 | - | - |
| Chlorantraniliprole | - | - | - | 0.20 | - |
| Cyantraniliprole | - | - | - | - | 0.20 |
| Esfenvalerate | 0.20 | - | - | - | - |
| Lambda-cyhalothrin | - | 0.20 | - | - | - |
| Cypermethrin | - | - | 0.20 | 0.20 | 0.20 |
| Rhodiasolv (registered trademark) Polarclean | 9.60 | | - | - | - |
| Agnique (registered trademark) AMD810 | - | 9.60 | - | - | - |
| N-octyl-2-pyrrolidone | - | - | 9.60 | 9.60 | 9.60 |
| Natural pumice | 90.00 | 90.00 | 90.00 | 90.00 | 90.00 |
| Total | 100.00 | 100.00 | 100.00 | 100.00 | 100.00 |

### Test Example 3

1 g of the pesticide granular composition obtained in each of Production Examples 12 to 16 was sampled four times, and analyzed contents of active ingredients by high performance liquid chromatography (HPLC) or gas chromatography (GC), from which an average value and a coefficient of variation were determined.

Also the hardness of each obtained particle was measured with a simple particle hardness tester from Tsutsui Scientific Instruments Co., Ltd., according to the following procedure. The test used a small pan spring scale type-3, and a conical pressurizing rod.
(i) Place the sample particle on a sample stage, and rotate the pressurizing handle to lower the pressurizing rod.
(ii) Rotate the handle slowly, and the record hardness (kg) indicated by an indwelling needle, after the sample particle collapsed and an indicator needle returned back. Repeat the operation three times, and find an average value to determine the hardness.

The results are shown in Tables 12 and 13.

As is clear from the results, the pesticide granular composition of the present invention obtained in Production Examples 12 to 16 demonstrated small coefficients of variation in the analytical value of the nicotinic acetylcholine receptor competitive modulator or the ryanodine receptor modulator, proving that the content of the active ingredient in the composition is uniform, and that a stable biological effect is expectable. Also the pyrethroid compound, which is a pesticide active ingredient having a melting point of 100°C or lower, demonstrated small coefficients of variation in the analytical value, proving that the content of the active ingredient in the composition is uniform, and that a stable biological effect is expectable.

**[Table 12]**

| | Production Example 12 | Production Example 13 | Production Example 14 | Production Example 15 | Production Example 16 |
|---|---|---|---|---|---|
| Clothianidin content (%) | 0.211 | 0.210 | 0.215 | - | - |
| Coefficient of variation (%) | 2.0 | 1.7 | 1.1 | - | - |
| Chlorantraniliprole content (%) | - | - | - | 0.195 | - |
| Coefficient of variation (%) | - | - | - | 0.9 | - |
| Cyantraniliprole content (%) | - | - | - | - | 0.194 |
| Coefficient of variation (%) | - | - | - | - | 2.6 |
| Esfenvalerate content (%) | 0.199 | - | - | - | - |
| Coefficient of variation (%) | 2.5 | - | - | - | - |
| Lambda-cyhalothrin content (%) | - | 0.205 | - | - | - |
| Coefficient of variation (%) | - | 2.1 | - | - | - |
| Cypermethrin content (%) | - | - | 0.210 | 0.213 | 0.196 |
| Coefficient of variation (%) | - | - | 1.4 | 5.6 | 2.0 |

**[Table 13]**

| | Production Example 12 | Production Example 13 | Production Example 14 | Production Example 15 | Production Example 16 |
|---|---|---|---|---|---|
| Hardness (kg) | 0.50 | 0.80 | 0.95 | 0.85 | 0.64 |

### Production Examples 17 and 18

Pesticide granular compositions were obtained in the same procedure as in Production Example 1, individually by using the compounds and the usage specified in Table 14. The natural pumice shown in Table 14 is a preparation of Kagalite (registered trademark) No. 2 sieved to a particle size of 500 to 1000 µm (oil absorption capacity = 8 to 9%), and the natural hard zeolite is a preparation of a natural hard zeolite from Neolite Kosan Co., Ltd. sieved to a particle size of 1.5 to 0.5 mm (oil absorption capacity = 10 to 16%).

**[Table 14]**

| | Production Example 17 | Production Example 18 |
|---|---|---|
| Clothianidin | 0.10 | 0.40 |
| N-octyl-2-pyrrolidone | 4.90 | 11.60 |
| Natural pumice | 95.00 | - |
| Natural hard zeolite | - | 88.00 |
| Total | 100.00 | 100.00 |

### Test Example 4

1 g of the pesticide granular composition obtained in each of Production Examples 17 and 18 was sampled four times, and analyzed contents of active ingredients by high performance liquid chromatography (HPLC), from which an average value and a coefficient of variation were determined.

Also the hardness of each obtained particle was measured with a simple particle hardness tester from Tsutsui Scientific Instruments Co., Ltd., according to the following procedure. The test used a small pan spring scale type-3, and a conical pressurizing rod.
(i) Place the sample particle on a sample stage, and rotate the pressurizing handle to lower the pressurizing rod.
(ii) Rotate the handle slowly, and record the hardness (kg) indicated by an indwelling needle, after the sample particle collapsed and an indicator needle returned back. Repeat the operation three times, and find an average value to determine the hardness.

The result is shown in Table 15. The pesticide granular composition of the present invention obtained in Production Examples 17 and 18 demonstrated small coefficients of variation in the analytical value of the nicotinic acetylcholine receptor competitive modulator, proving that the content of the active ingredient in the composition is uniform, and that a stable biological effect is expectable.

**[Table 15]**

| | Production Example 17 | Production Example 18 |
|---|---|---|
| Clothianidin content (%) | 0.102 | 0.398 |
| Coefficient of variation (%) | 1.2 | 1.4 |
| Hardness (kg) | 0.8 | 1.0 |

### INDUSTRIAL APPLICABILITY

According to the present invention, an impregnated pesticide granular composition for soil application that is capable of demonstrating a stable biological effect can be obtained.

## Claims

1. An impregnated pesticide granular composition for soil application comprising:
a) a nicotinic acetylcholine receptor competitive modulator or a ryanodine receptor modulator;
b) a polar organic solvent having, among Hansen solubility parameters, a dP of 4.5 or more and 11.0 or less, and a dH of 4.5 or more and 11.0 or less; and
c) a water-insoluble, oil-absorbing granular carrier having an oil absorption capacity of 1 to 70%, and a particle diameter of 0.2 to 2.0 mm, wherein
the composition having a hardness of 0.2 kg or more.

2. The pesticide granular composition according to claim 1, wherein the oil absorption capacity of the oil-absorbing granular carrier is 1 to 40%.

3. The pesticide granular composition according to claim 1 or 2, further comprising d) a pesticide active ingredient having a melting point of 100°C or lower.

4. The pesticide granular composition according to any one of claims 1 to 3, wherein the nicotinic acetylcholine receptor competitive modulator is imidacloprid, thiamethoxam or clothianidin.

5. The pesticide granular composition according to any one of claims 1 to 4, wherein the ryanodine receptor modulator is chlorantraniliprole or cyantraniliprole.

6. The pesticide granular composition according to any one of claims 3 to 5, wherein the pesticide active ingredient having a melting point of 100°C or lower is a pyrethroid compound.

7. The pesticide granular composition according to claim 6, wherein the pyrethroid compound is permethrin, cyfluthrin, beta-cyfluthrin, gamma-cyhalothrin, lambda-cyhalothrin, bifenthrin, deltamethrin, cypermethrin, alpha-cypermethrin, beta-cypermethrin, zeta-cypermethrin, fenpropathrin, tefluthrin, fenvalerate, esfenvalerate, ethofenprox or tau-fluvalinate.

8. The pesticide granular composition according to any one of claims 1 to 7, wherein the oil-absorbing granular carrier is a natural mineral or a crushed thereof.

9. A pest control method **characterized by** applying the composition described in any one of claims 1 to 8 to a soil.
